# EUROPÄISCHE PATENTSCHRIFT

(11) **EP 1 108 152 B1**
(45) Veröffentlichungstag und Bekanntmachung des Hinweises auf die Patenterteilung: **09.04.2003**
(21) Anmeldenummer: 99944435.9
(22) Anmeldetag: 19.08.1999
(51) Int. Cl.: F16D 65/06

(54) **LAMELLEN-BREMSKLOTZ**
MULTI-DISC BRAKE PAD
SABOT DE FREIN MULTILAME

(30) Priorität: 03.09.1998 DE 19840064
(43) Veröffentlichungstag der Anmeldung: 20.06.2001
(73) Patentinhaber: KNORR-BREMSE Systeme für Schienenfahrzeuge GmbH, 80809 München (DE)
(72) Erfinder: WIRTH, Xaver, D-85737 Ismaning (DE)
(86) Internationale Anmeldenummer: EP9906062
(87) Internationale Veröffentlichungsnummer: WO00014421

(56) Entgegenhaltungen:
- DE-A- 4 301 006
- FR-A- 813 627
- GB-A- 191 013 850
- GB-A- 191 414 036
- US-A- 2 095 427
- US-A- 2 140 081
- US-A- 2 161 363
- US-A- 2 236 311
- US-A- 2 553 824
- US-A- 4 501 347
- US-A- 5 407 031
- PATENT ABSTRACTS OF JAPAN vol. 013, no. 567 (M-908), 15. Dezember 1989 (1989-12-15) & JP 01 238926 A (TOKICO LTD), 25. September 1989 (1989-09-25)

## Beschreibung

Die Erfindung betrifft einen Schienenfahrzeug-Bremsklotz, umfassend mindestens zwei Reibwerkstoffblöcke gemäß dem Oberbegriff des Anspruches 1, ein Verfahren zur Herstellung eines derartigen Bremsklotzes gemäß Anspruch 7 sowie eine Schienenfahrzeugbremse mit einem derartigen Bremsklotz gemäß Anspruch 8.

Bremsklötze finden in Klotzbremsen bzw. Klotzbremseinheiten Verwendung. Klotzbremsen sind Bremsen, bei denen insbesondere mit Hilfe von Bremszylinder, Hebelübersetzung und einem Nachstellmechanismus der einen Reibwerkstoffblock umfassende Bremsklotz an die Radlauffläche gepreßt und so eine Bremswirkung erzielt wird. Bezüglich der Ausgestaltung von Klotzbremseinheiten bei Schienenfahrzeugen wird auf "Bremsen für Schienenfahrzeuge, Handbuch - Bremstechnische Begriffe und Werte, Knorr-Bremse AG München, 2. Auflage, 1990", Seite 41 verwiesen.

Oftmals sind die bislang ausgeführten Bremsklötze einteilig und stellen selbst den Reibwerkstoffblock dar. Materialien der Bremsklötze bzw. Reibwerkstoffblöcke sind perlitisches Gußeisen mit lamellarem Graphit, aus einem Gemenge verschiedener Stoffe in Kunstharz- oder Buna-Bindung bestehender Kunststoff oder Sintermaterial, das aus Metallfeinstpulver wie Eisen, Kupfer, Buntmetall besteht.

Aus der US 1 219 824 ist ein Bremsklotz bekanntgeworden, der eine Vielzahl von Reibwerkstoffblöcken umfaßt, die durch eine elastische Schicht getrennt sind. Die einzelnen Reibwerkstoffblöcke sind quer zur Längsrichtung des Bremsschuhs angebracht. Durch diese Anordnung soll erreicht werden, daß der Bremsklotz nur geringe Ausdehnungsänderungen bei auftretenden Temperaturschwankungen erfährt.

Die DE 24 18 024 zeigt eine kohlenstoffhaltige Flugzeugbremsscheibe bestehend aus einem starken, langlebigen Mittelkern und an beiden Seiten befestigten Belägen aus leichtgewichtigem Verschleißmaterial. Die Verschleißmaterialien sind mit dem Mittelkern durch eine Klebeschicht verbunden.

Aus der JP 55-97537 ist ein Bremsklotz bekanntgeworden, der in Längsrichtung zur Reduzierung des Bremsgeräusches geschlitzt ausgeführt ist. Die Reduzierung des Bremsgeräusches wird dadurch erreicht, daß aufgrund der geschlitzten Ausführung an der Bremsfläche höhere Temperaturen erreicht werden können.

Einen Bremsklotzschuh mit mehreren sehr einfach zu wechselnden Bremsklötzen zeigt die DE 30 33 936.

Aus den Druckschriften GB K 13850 und GB P 14036 sind Bremsklötze mit lamellenförmigen Reibwerkstoffblöcken, die entlang ihrer Längsseiten zu einem Bremsklotz verbunden sind, bekanntgeworden. Die Bremsklötze wurden durch quer zur Lamellenrichtung verlaufende Bolzenverbindungen zusammengehalten.

Bezüglich der Ausführungsformen von Bremsklötzen wird des weiteren beispielsweise auf "Bremsen für Schienenfahrzeuge, Handbuch - Bremstechnische Begriffe und Werte, Knorr-Bremse AG München, 1990", S. 22-23 verwiesen.

Bei den zuvor beschriebenen Klotzbremssystemen gemäß dem Stand der Technik ist das Tragbild aufgrund von Wärmedehnungen und Achsverschiebungen nur unzureichend. Hierbei gilt, daß das Tragbild um so schlechter ist, je härter das Material des Klotzes ist. Das schlechte Tragbild führt zur Riffelbildung oder zu Ausbröckelungen in den Radlaufflächen und infolgedessen zu einer hohen Geräuschentwicklung beim Bremsen.

Aufgabe der Erfindung ist es, ein Bremsklotzsystem bzw. Komponenten eines Bremsklotzsystemes anzugeben, mit dem die oben genannten Nachteile überwunden werden können.

Erfindungsgemäß wird die oben genannte Aufgabe durch einen Bremsklotz gemäß Anspruch 1 gelöst. Der Bremsklotz gemäß Anspruch 1 zeichnet sich dadurch aus, daß er mindestens zwei Reibwerkstoffblöcke umfaßt, wobei die einzelnen Reibwerkstoffblöcke lamellenförmig ausgebildet sind und entlang ihrer Längsseiten mechanisch oder durch eine elastische Zwischenschicht zu einem Bremsklotz verbunden sind. Durch die elastischen Zwischenschichten zwischen den einzelnen Reibwerkstoffschichten bzw. die mechanischen Verbindungen kann das Bremsgeräusch vermindert werden, da die Reibung zwischen den einzelnen Reibwerkstoffblöcken beim Bremsen Geräuschenergie aufnimmt.

Ein weiterer Vorteil des Bremsklotzes gemäß Anspruch 1 ist darin zu sehen , daß bei ungleichmäßiger Abnutzung des Radreifens oder bei Achsverschiebungen die einzelnen Lamellenpakete in vertikaler Richtung verschieben können, sich so der Lauffläche des Rades anpassen, wodurch stets eine im wesentlichen gleiche Flächenpressung unabhängig von der Achslage bzw. Abnutzung gewährleistet wird.

In einer bevorzugten Ausführungsform ist die elastische Zwischenschicht eine Klebeschicht. Alternativ hierzu ist vorgesehen, daß die mechanische Verbindung eine geschraubte, genietete oder formschlüssige Verbindung ist, insbesondere eine Klemmbügelverbindung.

Ein Bremsklotz umfaßt mindestens zwei nebeneinanderliegende Lamellen, bevorzugt drei bis vier Lamellen, die miteinander entlang der Längsseite mechanisch oder formschlüssig verbunden werden.

In einer bevorzugten Ausführungsform ist jedem Reibwerkstoffblock eine Haltevorrichtung zum Befestigen des Reibwerkstoffblockes an einem Bremsklotzschuh zugeordnet. Bei einer lamellenförmigen Ausbildung der Reibwerkstoffblöcke weist jede Lamelle eine derartige Haltevorrichtung auf der der Radlauffläche abgewandten und dem Bremsschuh zugewandten Seite auf.

Besonders bevorzugt ist es, wenn die Haltevorrichtungen der einzelnen Reibwerkstoffblöcke eine Blecharmierung mit integrierten Haltewinkeln aufweisen. Die Blecharmierung ist mit dem einzelnen Reibwerkstoffblock bzw. den Lamellenpaketen unlösbar verbunden, beispielsweise durch Verkleben. Über die Blecharmierung wird die Anpreßkraft vom Bremsklotzschuh auf die Reibwerkstoffblöcke übertragen und somit die Anpreßkraft auf den Bremsklotz vom Bremsschuh her eingeleitet. Die Haltewinkel dienen der Fixierung des Bremsklotzes am Bremsklotzschuh und der Sicherung gegen das Herausfallen oder Klappern der einzelnen Reibwerkstoffblöcke.

Bevorzugt sind die Haltewinkel als U-förmigen Blattfedern. die Teil der am Reibwerkstoffblock angeordneten Armierung sind, ausgebildet. Neben dem Bremsklotz stellt die Erfindung auch ein Verfahren zur Herstellung eines derartigen Bremsklotzes zur Verfügung, das dadurch gekennzeichnet ist, daß die einzelnen Reibwerkstoffblöcke durch Pressen oder Ausschneiden aus Platten erhalten, und durch Kleben oder mechanisch elastische Verbindung zu einem Bremsklotz verbunden werden, so daß von der Verbindung Energie aufgenommen werden kann.

Neben dem Bremsklotz stellt die Erfindung auch eine Schienerfahrzeugbremse mit einem Bremsklotzschuh und einem derartigen Bremsklotz gemäß Anspruch 8 zur Verfügung. Der Bremsklotzschuh weist einen Tragkörper, eine Anbindungsvorrichtung an die Krafteinheit der Klotzbremsvorrichtung zur Betätigung des Bremsklotzschuhs, sowie eine Reibwerkstoffblock-Haltevorrichtung auf. Die Reibwerkstoffblock-Haltevorrichtung kann in Art einer Führungsschiene ausgestaltet sein, die in Radumlaufrichtung verläuft.

Die Tauschbarkeit des erfindungsgemäßen Bremsklotzschuhs mit konventionellen Bremsklotzschuhen wird dadurch gewährleistet, daß die Anbindung des erfindungsgemäßen Bremsklotzschuhs analog zu der der konventionellen Bremsklotzschuhe ausgestaltet wird.

Um die Einzelkräfte der Reibwerkstoffblöcke, des Lamellenbremsklotzes auf die Radlauffläche, konstant zu halten, schlägt die Erfindung in einer Weiterbildung vor, die Führungschienen in Form eines Waagebalken-Führungsschienensystems auszubilden, das ein Verschieben der Lamellen des Bremsklotzes vertikal zueinanander, d.h. senkrecht zur Radlauffläche unterstützt. Daher führt die Ausbildung der Führungsschiene als Waagebalkensystem in Kombination mit dem Lamellenbremsklotz, bei dem die einzelnen Lamellen in vertikaler Richtung aufgrund der mechanischen bzw. scherelastischen Zwischenschicht verschiebbar sind zu einem sehr guten Tragbild. Mit dieser Maßnahme wird eine höhere Belastbarkeit der Räder ermöglicht, sowie die Riffelbildung oder Ausbröckelungen und somit die Geräuschentwicklung beim Abrollen des Rades vermindert.

Das Waagebalken-Führungsschienensystem ist des weiteren durch elastisches Nachgeben senkrecht zur Radlauffläche gekennzeichnet und kann über die gesamte Bogenlänge des Bremsklotzes einstückig oder in mehrere Bereiche untergliedert ausgebildet sein. Auch mehrfach geschlitzte Führungsschienen sind möglich. Das Waagebalken-Führungsschienensystem kann sich des weiteren aus einzelnen Waagebalken zusammensetzen, wobei ein Waagebalken je zwei Reibwerkstoffblöcken zugeordnet ist. Die einzelnen Waagebalken sind gelenkig formschlüssig miteinander zu dem erfindungsgemäßen Waagebalkensystem verbunden.

Alternativ hierzu kann das gesamte Waagebalkensystem als ein integriertes Bauteil, beispielsweise aus Profilstahl, hergestellt werden.

Damit der Bremsklotz auch bei großen Seitenverschiebungen des Rades noch auf der Radlauffläche aufliegt, ist in einer Weiterbildung der Erfindung vorgesehen, daß der Bremsklotzschuh seitlich Führungsteile zur Radstirnseite hin aufweist, die eine Seitenbewegung des Bremsklotzes erlauben. Besonders bevorzugt sind diese Führungsteile zur Radseite hin als verschleißfeste Platten ausgebildet. Um die über die Reibwerkstoff-Haltevorrichtung mit dem Bremsklotzschuh verbundenen Reibwerkstoffblöcke synchron bei einer Axialverschiebung des Radsatzes mitführen zu können, ist in einer speziellen Ausführungsform der Erfindung vorgesehen, daß die Anbindungsvorrichtung an die Krafteinheit derart ausgestaltet ist, daß sie eine solche Bewegung zuläßt. Insbesondere eignet sich hierfür eine Pendelaufhängung des Bremsklotzschuhs.

Die Erfindung wird nachfolgend anhand der Figuren beispielhaft beschrieben.

Es zeigen:
- Figur 1: eine konventionelle Klotzbremseinheit;
- Figur 2A: einen erfindungsgemäßen Bremsklotz;
- Figur 2B: eine erste Ausführungsform des erfindungsgemäßen Bremsklotzes gemäß Figur 2A mit mechanischer Verbindung der einzelnen Reibwerkstoffblöcke:
- Figur 2C: eine zweite Ausführungsform der Erfindung mit miteinander verbundenen Zwischenschichten;
- Figur 3A: die erfindungsgemäße Ausgestaltung des Bremsklotzschuhs mit daran befestigtem Bremsklotz im Schnitt:
- Figur 3B: einen Schnitt entlang der Linie A-A gemäß Figur 3A;
- Figur 3C: eine einteilige Ausführungsform des Waagebalkensystems des erfindungsgemäßen Bremsklotzschuhs:
- Figur 3D: eine erste alternative Ausführungsform einer Waagebalkenaufhängung gemäß Figur 3A;
- Figur 3E: eine zweite alternative Ausführungsform einer Waagebalkenaufhängung gemäß Figur 3A;
- Figur 3F: eine dritte alternative Ausführungsform einer Waagebalkenaufhängung gemäß Figur 3A;
- Figur 4A: eine erfindungsgemäße Ausführungsform eines Bremsklotzschuhs mit daran befestigtem Lamellenbremsklotz und seitlichen Führungsteilen im Querschnitt;
- Figur 4B: eine alternative Ausführungsform zu Figur 4A mit einer gummielastischen Aufhängung;
- Figur C: eine alternative Ausführungsform zu Figur 4B mit einer federelastischen Aufhängung.

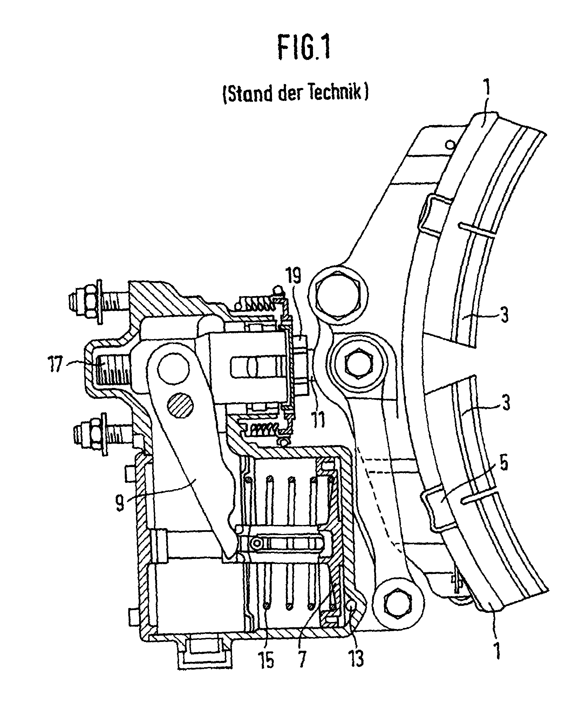

Figur 1 zeigt eine Bremsklotzeinheit gemäß dem Stand der Technik, nämlich die von der Anmelderin ausgeführte und gelieferte Klotzbremseinheit PC 7X im Zustand mit entlüftetem Bremszylinder. Sie umfaßt zwei am Bremsklotzschuh 1 befestigte Bremsklötze 3. Die Bremsklötze 3 werden in Bremsklotzschuh 1 durch formschlüssige Verbindung der an jedem Bremsklotz 3 angeordneten Halterungen 5 befestigt. Die Betätigungsvorrichtung für die Klotzbremseinheit umfaßt einen Kolben 7, und einen Bremszylinder, der über Hebel 9 die Anbindungsvorrichtung 11 des Bremsklotzschuhs 1 betätigt.

Weitere Einzelheiten sind der Druckluftanschluß 13 des Bremszylinders, die Druckfeder 15, der Verschleißnachsteller 17 sowie die Verstellmutter 19.

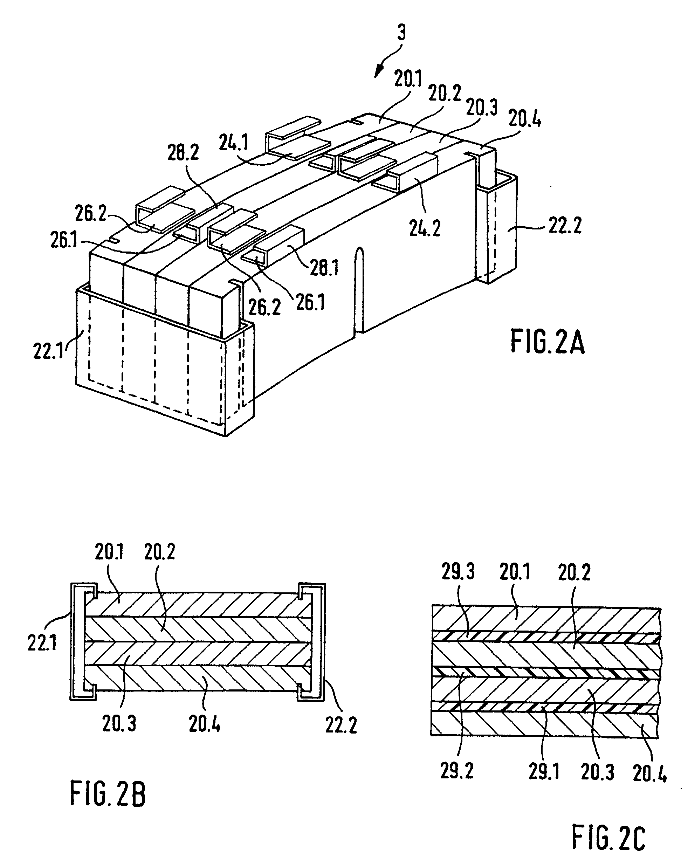

In Figur 2A ist eine Ausführungsform eines erfindungsgemäßen Bremsklotzes 3 in perspektivischer Ansicht dargestellt. Der erfindungsgemäße Bremsklotz 3 setzt sich in der dargestellten Ausführungsform aus insgesamt vier Reibwerkstoffblöcken 20.1, 20.2, 20.3 und 20.4 zusammen. Die einzelnen Reibwerkstoffblöcke 20.1, 20.2, 20.3, 20.4 weisen eine lamellenförmige Form auf und sind entlang ihrer Längsseiten zu dem erfindungsgemäßen Bremsklotz 3 verbunden. Das Lamellenpaket wird in der in Figur 2A mittels Blechklammern 22.1, 22.2 mechanisch zu einem Paket verbunden. Die Blechklammern greifen in die jeweiligen am Rand des Bremsklotzes befindlichen Reibwerkstoffblöcke 20.1, 20.4 in Nuten ein.

Durch die mechanische Verbindung mittels Blechklammern 22.1, 22.2, die vorliegend eine Klemmbügelverbindung darstellen, ist eine Verschieblichkeit der einzelnen Reibwerkstoffblöcke 20.1, 20.2. 20.3, 20.4 gegeneinander, insbesondere in vertikaler Richtung, d.h. senkrecht zur Radlauffläche gegeben. Aufgrund der Verschieblichkeit wird Energie aufgenommen, das Geräusch beim Bremsen vermindert und auch bei Abnutzung der Radlauffläche oder Achsverschiebungen eine gleichmäßige Flächenpressung erreicht.

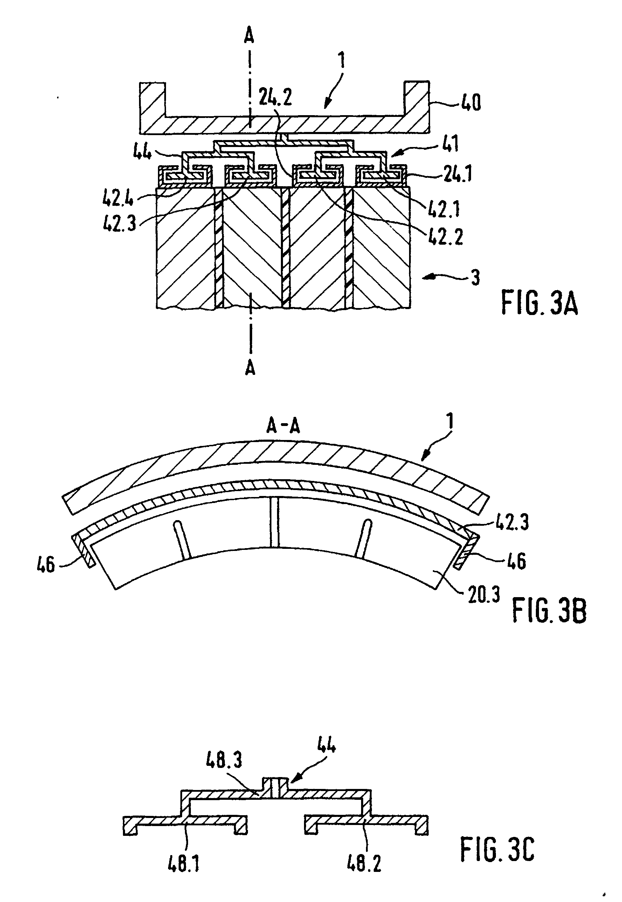

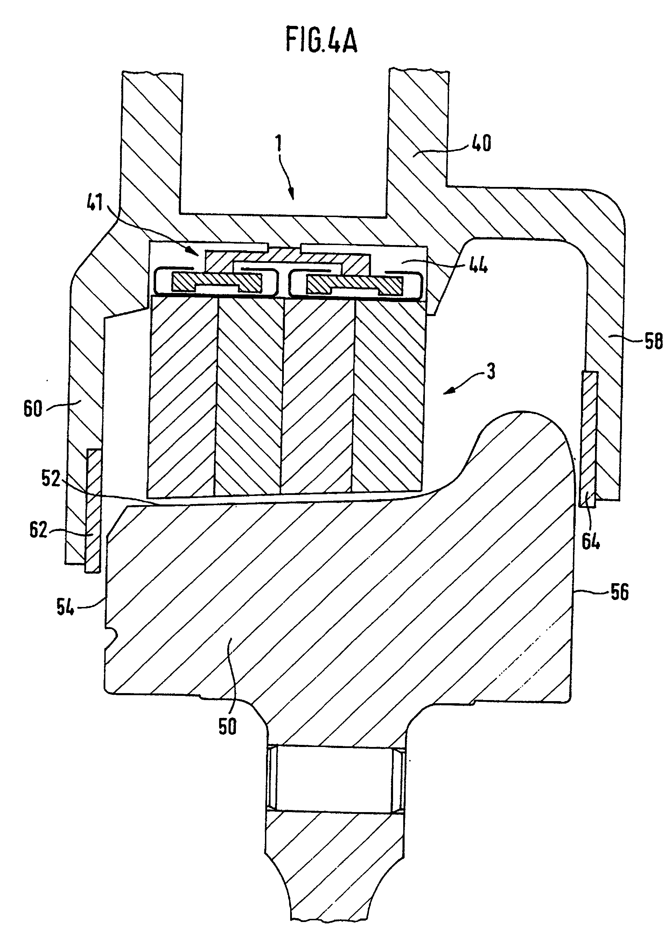

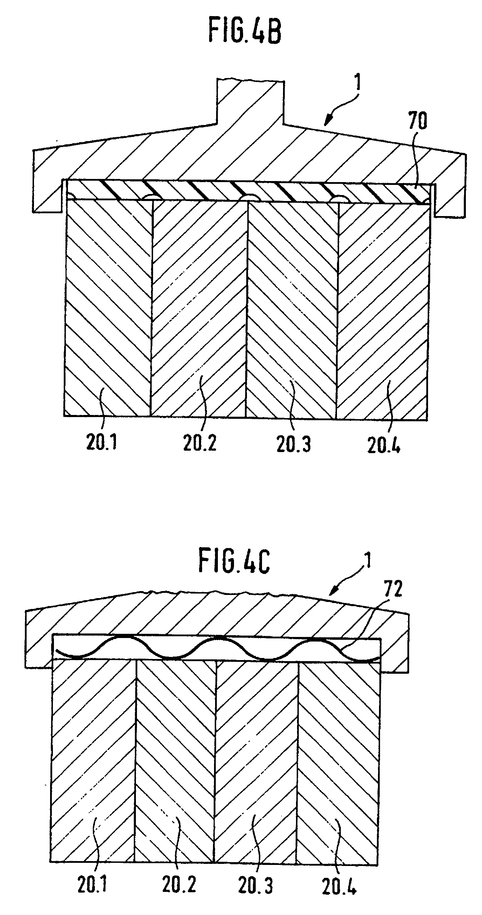

Erfindungsgemäß ist an jedem der einzelnen Reibwerkstoffblöcke 20.1, 20.2, 20.3 und 20.4 eine Haltevorrichtung 24.1 und 24.2 zum Halten des Bremsklotzes 3 am Bremsklotzschuh 1 vorgesehen. Die Haltevorrichtung 24.1, 24.2 des erfindungsgemäßen Bremsklotzes 3 am Bremsklotzschuh 1 ist in der dargestellten Ausführungsform bereits auf die erfindungsgemäße, in Figuren 3A und 4 dargestellte Reibwerkstoffblock-Haltevorrichtung 41abgestellt. Selbstverständlich sind auch konventionelle Haltevorrichtungen einsetzbar, die eine Verbindung des erfindungsgemäßen lamellaren Bremsklotzes 3 mit einem herkömmlichen Bremsklotzschuh 1 ermöglichen.

Die auf die erfindungsgemäße Reibwerkstoffblock-Haltevorrichtung 41 abgestimmte Haltevorrichtung 24.1, 24.2 am Bremsklotz 3 setzt sich aus je zwei Armierungsblechen 26.1, 26.2 zusammen, die einen Haltewinkel 28.1, 28.2 aufweisen.

Jede der Blecharmierungen 26.1, 26.2 ist mit dem zugehörigen Reibwerkstoffblock 20.1, 20.2, 20.3, 20.4 unlösbar verbunden, beispielsweise mittels einer Klebverbindung. Auch mechanische Schraub- bzw. Nietverbindungen sind möglich.

Als Materialien für die einzelnen lamellenförmigen Reibwerkstoffblöcke 20.1, 20.2, 20.3, 20.4 kommen sämtliche bekannte, für Bremsklötze derzeit verwendete Reibwerkstoffmaterialien, wie beispielsweise Grauguß, Sintermaterialien, Kunststoffmaterialien oder Kompositmaterialien, in Betracht. Bezüglich möglicher Reibwerkstoffmaterialien wird auf "Bremsen für Schienenfahrzeuge, Handbuch - Bremstechnische Begriffe und Werte, Knorr-Bremse AG München" verwiesen.

Neben der Ausführungsform mit mechanischer Halterung der einzelnen Reibwerkstoffblöcke, die in der Draufsicht in Figur 2B dargestellt ist, ist in einer alternativen Ausführungsform, wie in Figur 2C dargestellt, vorgesehen, die einzelnen Reibwerkstoffblöcke 20.1, 20.2, 20.3 und 20.4 fest über Zwischenschichten 29.1, 29.2, 29.3 zu verbinden. Die Zwischenschichten 29.1, 29.2, 29.3 sind elastische Schichten, beispielsweise Klebeschichten aus entsprechendem elastischen Material. Ein derartiges Schichtmaterial ist beispielsweise verklebter Moosgummi. Die elastischen Zwischenschichten lassen wiederum die Verschiebbarkeit der einzelnen Lamellen in vertikaler Richtung, d.h. senkrecht zur Radlauffläche zu, so daß eine gleichmäßige Flächenpressung erreicht wird.

Ebenso ist eine Ausführungsform vorgesehen, bei der die Zwischenschichten 29.1, 29.2 und 29.3 zur Reduktion des Verschleißes zwischen den Reibwerkstoffblöcken 20.1, 20.2, 20.3, 20.4 als Gleitsschichtfolie oder Gleitschichtblech ausgeführt ist. Hierdurch wird der Reibverschleiß zwischen den Reibwerkstoffblöcken 20.1, 20.2, 20.3, 20.4 bei Relativbewegungen der einzelnen Reibwerkstoffblöcke reduziert.

Hierbei sind Schichten, Bleche oder Folien aus Kunststoff oder Aluminium geeignet, wobei die Schicht auch als Spritzschicht aufgebracht werden kann.

Neben der dargestellten Ausführungsform mit vier parallelen Lamellen sind auch Ausführungsformen mit zwei, sechs bzw. acht Lamellen vorstellbar, ohne daß in den bevorzugten Ausführungsformen eine Begrenzung der Lamellenzahl pro Bremsklotz 3 zu sehen wäre.

Da sowohl die elastischen Zwischenschichten 29.1, 29.2, 29.3 der Reibwerkstoffblöcke 20.1, 20.2, 20.3, 20.4 als auch dessen mechanische Verbindung, beispielsweise durch die dargestellten Klemmbügel 22.1, 22.2, Energie durch Reibung aufnehmen, wird die geforderte Geräuscharmut beim Bremsen erreicht.

In den Figuren 3A, 3B und 3C ist die erfindungsgemäße Ausführungsform eines besonders geräuscharmen Bremsklotzschuhs 1 gemäß der Erfindung dargestellt.

Figur 3A ist ein Querschnitt durch einen erfindungsgemäßen Bremsklotzschuh 1 mit daran angeordnetem erfindungsgemäßem Lamellenbremsklotz 3, wie eingehend bei den Figuren 2A bis 2C beschrieben.

Obwohl in Kombination mit dem Lamellenbremsklotz 3 eine besonders hohe Geräuscharmut erzielt wird, könnten am nachfolgend beschriebenen Bremsklotzschuh 1 konventionelle Bremsklötze angeordnet sein, ohne daß vom Gedanken der Erfindung abgewichen wird.

Der erfindungsgemäße Bremsklotzschuh 1 umfaßt einen Trägerkörper 40. Am Trägerkörper 40 ist eine Anbindungsvorrichtung (nicht dargestellt) an die Krafteinheit der Bremsklotzeinheit, wie beispielsweise dem Bremszylinder 7 gemäß Figur 1, angebracht. Die Anbindungsvorrichtung kann entweder konventionell ausgeführt sein oder in Art einer Pendelaufhängung. Letzteres ist insbesondere für die bei Figur 4 beschriebene weitergebildete Ausführungsform des Bremsklotzschuhs 1 von Interesse.

An dem Tragkörper 40 ist eine Reibwerkstoffblock-Haltevorrichtung 41 zum Halten des Bremsklotzes 3 in dafür vorgesehenen Haltevorrichtungen 24.1, 24.2 vorgesehen.

Die Reibwerkstoffblock-Haltevorrichtung 41 umfaßt in vorliegender Ausführungsform insgesamt vier in Radumlaufrichtung verlaufende Führungsschienen 42.1, 42.2, 42.3 sowie 42.4. Die Führungsschienen 42.1, 42.2, 42.3, 42.4 sind über ein Waagebalkensytem 44 mit dem Tragkörper 40 verbunden. Die Führungsschienen 42.1, 42.2, 42.3, 42.4 ermöglichen in Kombination mit dem Waagebalkensystem 44 ein Verschieben der einzelnen lamellenförmig ausgebildeten Reibwerkstoffblöcke 20.1, 20.2, 20.3, 20.4, die den Bremsklotzes 3 ausbilden, senkrecht zur Radlauffläche, so daß die Einzelkräfte konstant gehalten werden können.

Gegen ein Herausfallen oder Klappern sind die einzelnen Reibwerkstoffblöcke 20.1, 20.2, 20.3, 20.4 bzw. Lamellen durch die bereits in Figur 2A bis 2C dargestellten Haltewinkel 28.1, 28.2 bzw. U-förmige Blattfedern, die Teil der Lamellenarmierung sind, gesichert.

Die Ausgestaltung der Reibwerkstoffblock-Haltevorrichtung 41 mittels Führungsschienen 42.1, 42.2, 42.3, 42.4 erlaubt neben der Bewegung der Reibwerkstoffblökke 20.1, 20.2, 20.3, 20.4 senkrecht zur Radlauffläche mit Hilfe des Waagebalkensystems 44 eine Verschiebung in Umfangsrichtung. Die Verschieblichkeit in Umfangsrichtung erleichtert die Montage jedes Reibwerkstoffblockes 20.1, 20.2, 20.3, 20.4.

Durch die erfindungsgemäße Reibwerkstoffblock-Haltevorrichtung 41 in Kombination mit der am erfindungsgemäßen Bremsklotz 3 angeordneten Haltevorrichtung (24.1, 24.2) ist somit eine Bewegung des Lamellenbremsklotzes in Richtung der Radlauffläche möglich. um sich der Radlauffläche anzupassen. Dies führt in einem kombinatorischen Gesamteffekt mit dem Waagebalkensystem 44 zu unerwartet hoher Geräuscharmut und einem sehr guten Tragbild auch beispielsweise bei Achsverschiebungen. Zudem wird die Leistungsfähigkeit der Klotzbremse durch höhere thermische Belastbarkeit verbessert.

Figur 3B zeigt ein erfindungsgemäßes, besonders vorteilhaftes System aus Bremsklotzschuh 1 und Bremsklotz 3 entlang von Schnitt A-A in Figur 3A. Gleiche Bauteile wie in Figur 3A sind mit denselben Bezugsziffern gekennzeichnet. Der Reibwerkstoffblock 20.3 wird von der Führungsschiene 42.3 in Kombination mit der Haltevorrichtung, die vorliegend nicht dargestellt ist, und dem erfindungsgemäßen Waagebalkensystem 44 gehalten. Ein Herausgleiten des Reibwerkstoffblockes 20.3 in Umfangsrichtung wird durch Anschläge 46 an den Führungsschienen des jeweiligen Lamellenbremsklotzes verhindert. Anstelle eines Anschlages 46 ist ein Riegelverschluß (nicht dargestellt) verwendbar. Die in Figur 3B dargestellte Führungsschiene 42.3 ist über die gesamte Bogenlänge einstückig ausgebildet. In einer alternativen Ausführungsform, die vorliegend nicht dargestellt ist. wären Führungsschienen nur in Teilbereichen oder auch mehrfach geschlitzte Führungsschienen möglich. Durch deren biegeelastische Ausführung ergibt sich eine gelenkige Verbindung der Waagebalken 48.1 und 48.2 an Waagenbalken 48.3, wie im folgenden beschrieben wird.

Figur 3C zeigt in einer Detaildarstellung das erfindungsgemäße Waagebalkensystem der Reibwerkstoffblock-Haltevorrichtung 41 des erfindungsgemäßen Bremsklotzschuhs 1. Wie deutlich zu erkennen ist, setzt sich das Waagebalkensystem 44 aus einzelnen Waagebalken 48.1, 48.2 und 48.3 zusammen. Die einzelnen Waagebalken 48.1, 48.2, 48.3 können entweder mechanisch mittels Nieten, Schrauben, Schweißpunkten oder Formschluß miteinander verbunden sein oder aber, bei einer integralen Lösung, einstückig aus Profilstahl.

Entsprechend der Anzahl der Haltevorrichtungen am Lamellenbremspaket besteht das Waagebalkensystem aus einem oder mehreren einzelnen Waagebalken.

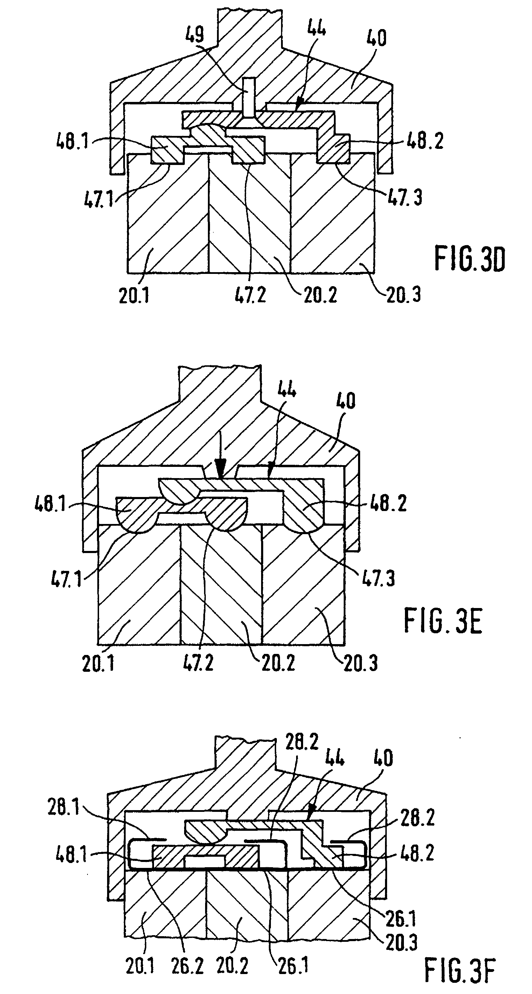

In den Figuren 3D-3F sind Ausführungsformen der Erfindung dargestellt, bei der das Waagebalkensystem 44 zwei Waagebalken 48.1, 48.2 umfasst. Gleiche Bauteile wie in den vorangegangenen Figuren sind mit denselben Bezugsziffern belegt.

In der Ausführungsform gemäß Figur 3D sind die Waagebalken 48.1, 48.2 in Ausnehmungen 47.1, 47.2, 47.3 der drei Reibwerkstoffblöcke 20.1, 20.2, 20.3 befestigt. Am Tragkörper 40 wiederum ist das Waagebalkensystem 44 mittels eines Stiftes 49 befestigt.

Figur 3E zeigt zeigt eine alternative Ausführungsform zu Figur 3D.

Bei der Ausführungsform gemäß Figur 3F wird der Bremsklotz 3 bzw. werden die einzelnen Reibwerkstoffelemente 20.1, 20.2, 20.3 mit Hilfe von Armierungsblechen 26.1, 26.2, die ihrerseits Haltewinkel 28.1, 28.4 aufweisen, gehalten, wie insbesondere Fig. 2A zu entnehmen ist.

In einer weitergebildeten, in Figur 4A dargestellten Ausführungsform der Erfindung ist der Bremsklotzschuh 1 für große Seitenbewegungen des Radsatzes mit seitlichen Führungsflächen 58, 60 ausgebildet. Gleiche Bauteile wie in den vorangegangenen Figuren sind auch in Figur 4 mit denselben Bezugsziffern belegt.

Figur 4A zeigt das erfindungsgemäße System sowie das zu bremsende Rad 50 mit Radlauffläche 52 im Querschnitt. Am Trägerkörper 40 des Bremsklotzschuhs 1 sind zu den Radstirnseiten 54, 56 hin Führungsflächen 58. 60 ausgebildet. Die Führungsflächen 58, 60 weisen in einer bevorzugten Ausführungsform verschleißfeste Platten 62, 64 auf. Durch die als seitliche Führungsteile wirkenden Führungsflächen 58, 60 wird sichergestellt, daß auch bei großen Seitenverschiebungen des Rades 50 der Bremsklotz 3 noch auf der Radlauffiäche 52 verbleibt, wenn die gesamte Einheit aus Bremsklotzschuh 1 und Bremsklotz 3 der Seitenbewegung folgt. Deutlich zu erkennen sind die einzelnen Reibwerkstoffblöcke sowie das erfindungsgemäße Waagebalkensystem 44 der Reibwerkstoffblock-Haltevorrichtung 42.

Um das Mitbewegen des Bremsklotzschuhs 1 bei einer Seitenverschiebung des Rades 50 zu ermöglichen, ist es erforderlich, die Anbindungsvorrichtung 11 an die Betätigungseinrichtung entsprechend zu gestalten, beispielsweise in Form einer Pendelaufhängung.

Neben der Aufhängung mittels eines Waagebalkensystems 44 kann alternativ, wie in den Figuren 4B und 4C dargestellt, eine bewegliche Aufhängung des Bremsklotzes 3 mit einer elastischen Matte 70 oder einem gewellten Federblock 72 vorgesehen sein. Die Ausführung gemäß Figur 4C mit einem gewellten Federblech 72 hat den Vorteil, daß sowohl ein Feder- als auch ein Wiegebalkeneffekt erreicht wird.

Die erfindungsgemäße Ausführungsform eines lamellenförmigen Bremsklotzes in Kombination mit der Waagebalkenaufhängung, einer elastischen Aufhängung oder Federblechaufhängung ermöglicht eine einfache Montage des Bremsklotzes ähnlich der bereits bekannten Bremsbelagbefestigung bei Scheibenbremsbelägen mit Hilfe von sogenannten Schwalbenschwanzführungen.

Des weiteren wird eine besonders hohe Geräuscharmut beim Bremsen erreicht, wenn sowohl die elastischen Zwischenschichten der Reibwerkstoffblöcken bzw. Lamellen oder die mechanischen Klemmbügelverbindungen durch Reibung zwischen den Lamellen Energie aufnehmen. Die horizontale Verschiebbarkeit der einzelnen Reibwerkstoffblöcke ermöglichet eine optimale Anpassung an die Radlaufflächen, z.b. bei Abnutzung oder Achsverschiebung. Folge hiervon ist ein gutes Tragbild unabhängig von den Betriebsbedingungen. Aufgrund des guten Tragbildes ist die Riffelbildung gering, und es treten vermindert Ausbröckelungen auf, die sonst Lärm beim Abrollen des Rades erzeugen.

Des weiteren ermöglicht eine besondere Ausführungsform der erfindungsgemäßen Ausgestaltung mit seitlichen Führungselementen auch ein sicheres Anliegen auf der Radlauffläche bei großen Axialbewegungen des Radsatzes, insbesondere wird ein Herauswandern aus dem Bereich des Bremsklotzes verhindert.

### Bezugszeichenliste

- 1:: Bremskiotzschuh
- 3:: Bremsklötze
- 5:: Halterungen
- 7:: Kolben
- 9:: Hebel
- 11:: Anbindungsvorrichtung
- 13:: Druckluftanschluß
- 15:: Druckfeder
- 17:: Verschleißnachsteller
- 19:: Verstellmutter
- 20.1, 20.2, 20.3, 20.4:: Reibwerkstoffblöcke
- 22.1, 22.2:: Blechklammern
- 24.1, 24.2:: Haltevorrichtung
- 26.1, 26.2:: Amierungsblech
- 28.1, 28.2:: Haltewinkel
- 29.1, 29.2, 29.3:: Zwischenschicht
- 40:: Tragkörper
- 41:: Reibwerkstoffblock-Haltevorrichtung
- 42.1, 42.2, 42.3, 42.4:: Führungsschienen
- 44:: Waagebalkensystem
- 46:: Anschläge
- 47.1, 47.2, 47.3:: Ausnehmungen
- 48.1, 48.2, 48.3:: Waagebalken
- 49:: Stift
- 50:: Rad
- 52:: Radlauffläche
- 54, 56:: Radstirnseiten
- 58, 60:: Führungsflächen
- 62, 64:: verschleißfeste Platten
- 70:: elastische Matte
- 72:: Federblech

## Patentansprüche

1. Schienenfahrzeug-Bremsklotz, umfassend:
mindestens zwei Reibwerkstoffblöcke (20.1, 20.2, 20.3, 20.4);
mindestens eine an den Reibwerkstoffblöcken (20.1, 20.2, 20.3, 20.4) angebrachte Haltevorrichtung (24.1, 24.2) zum Befestigen der Reibwerkstoffbläcke an einen Bremsschuh (1), wobei
die einzelnen Reibwerkstoffblöcke (20.1, 20.2, 20.3, 20.4) lamellenförmige Form aufweisen; und
entlang ihrer Längsseiten miteinander zu einem Bremsklotz (3) verbunden sind, **dadurch gekennzeichnet, daß**
die Verbindung mechanisch und/oder mit Hilfe einer scherelastischen Zwischenschicht derart ausgeführt ist, daß die einzelnen Reibwerkstoffblöcke gegeneinander verschiebbar sind.

2. Schienenfahrzeug-Bremsklotz nach Anspruch 1, **dadurch gekennzeichnet, daß** die scherelastische Zwischenschicht (29.1, 29.2, 29.3) eine Klebeschicht oder eine mit den Reibwerkstoffblöcken (20.1, 20.2, 20.3, 20.4) verklebte Zwischenschicht ist.

3. Schienenfahrzeug-Bremsklotz nach Anspruch 1, **dadurch gekennzeichnet, daß** die Zwischenschicht (29.1, 29.2, 29.3) als Gleitschicht, Gleitblech oder Gleitfolie ausgeführt ist.

4. Schienenfahrzeug-Bremsklotz nach einem der vorgenannten Ansprüche, **dadurch gekennzeichnet, daß** die mechanische Verbindung eine geschraubte, genietete oder eine formschlüssige Klemmbügelverbindung (22.1, 22.2) ist.

5. Schienenfahrzeug-Bremsklotz nach einem der vorgenannten Ansprüche, **dadurch gekennzeichnet, daß** jedem Reibwerkstoffblock (20.1, 20.2, 20.3, 20.4) eine Haltevorrichtung (24.1, 24.2) zugeordnet ist.

6. Schienenfahrzeug-Bremsklotz nach einem der vorgenannten Ansprüche, **dadurch gekennzeichnet, daß** die Haltevorrichtung (24.1, 24.2) eine auf der dem Bremsschuh (1) zugewandten Seite angeordnete Blecharmierung (26.1, 26.2) mit Haltewinkeln (28.1, 28.2) ist.

7. Verfahren zur Herstellung eines Bremsklotzes nach einem der Ansprüche 1 bis 6, **dadurch gekennzeichnet, daß** die einzelnen lamellenförmigen Reibwerkstoffblöcke (20.1, 20.2, 20.3, 20.4) durch Pressen oder Schneiden von - Platten erhalten werden, und die einzelnen lamellenförmigen Reibwerkstoffblöcke (20.1, 20.2, 20.3, 20.4) durch Kleben oder mechanisch entlang ihrer Längsseiten miteinander zu einem Bremsklotz (3) verbunden werden, derart daß die einzelnen Reibwerkstoffblöcke gegeneinander verschiebbar sind.

8. Schienenfahrzeugbremse mit mindestens
einem Bremsklotzschuh;
einer Krafteinheit zur Betätigung des Bremsklotzschuhs, wobei der Bremsklotzschuh umfaßt:
einen Tragkörper (40);
eine Anbindungsvorrichtung (11) an eine Krafteinheit zur Betätigung des Bremsklotzschuhs (1);
eine Reibwerkstoffblock-Haltevorrichtung (41) zum Halten mindestens eines Bremsklotzes, umfassend mindestens zwei Reibwerkstoffblöcke (20.1, 20.2, 20.3, 20.4) am Bremsklotzschuh (1);
**dadurch gekennzeichnet, daß**
der Bremsklotz mit mindestens zwei Reibwerkstoffblöcken ein Bremsklotz gemäß einem der Ansprüche 1-6 ist.

9. Schienenfahrzeugbremse nach Anspruch 8, **dadurch gekennzeichnet, daß** die Reibwerkstoffblock-Haltevorrichtung (41) mindestens eine Führungsschiene (42.1, 42.2 42.3, 42.4) in Umlaufrichtung des Rades (50) umfaßt.

10. Schienenfahrzeugbremse nach Anspruch 9, **dadurch gekennzeichnet, daß** die Reibwerkstoffblock-Haltevorrichtung (41) mindestens zwei Führungsschienen (42.1, 42.2 42.3, 42.4) in Umlaufrichtung des Rades (50) umfaßt, die in Form eines Waagebalkensystems (44) miteinander verbunden sind.

11. Schienenfahrzeugbremse nach Anspruch 10, **dadurch gekennzeichnet, daß** das Waagebalkensystem (44) einzelne Waagebalken (48.1, 48.2, 48.3) umfaßt, die gelenkig miteinander verbunden sind.

12. Schienenfahrzeugbremse nach Anspruch 10, **dadurch gekennzeichnet, daß** das gesamte Waagebalkensystem (44) ein integriertes, biegeelastisches Bauteil ist.

13. Schienenfahrzeugbremse nach Anspruch 12, **dadurch gekennzeichnet, daß** das integrierte Bauteil aus Profilstahl hergestellt ist.

14. Schienenfahrzegbremse nach Anspruch 9, **dadurch gekennzeichnet, daß** die Reibwerkstoffblock-Haltevorrichtung (24.1, 24.2) zur verschieblichen Führung mindestens eines Reibwerkstoffblockes (20.1, 20.2, 20.3, 20.4) am Bremsklotzschuh (1) zumindest ein Federelement (72) aufweist.

15. Schienenfahrzeugbremse nach Anspruch 14, **dadurch gekennzeichnet, daß** der Reibwerkstoffblock (20.1, 20.2, 20.3, 20.4) mittels des Federelements (72) in Betätigungsrichtung federelastisch verschieblich geführt ist.

16. Schienenfahrzeugbremse nach einem der Ansprüche 9 bis 15, **dadurch gekennzeichnet, daß** der Bremsklotzschuh (1) seitliche Führungsflächen (58, 60) zur Stirnseite des Rades (50) hin aufweist.

17. Schienenfahrzeugbremse nach Anspruch 16, **dadurch gekennzeichnet, daß** die Führungsflächen (58, 60) als verschleißfeste Platten (62, 64) zur Radseite hin ausgestaltet sind.

18. Schienenfahrzeugbremse nach Anspruch 16 oder 17. **dadurch gekennzeichnet, daß** die Anbindungsvorrichtung (11) des Bremsklotzschuhs (1) an die Krafteinheit derart ausgestaltet ist, daß der Bremsklotzschuh (1) bei Axialbewegungen des Radsatzes mit Hilfe der Führungsflächen (58, 60) mitgeführt wird.

19. Schienenfahrzeugbremse nach Anspruch 18, **dadurch gekennzeichnet, daß** die Anbindungsvorrichtung (11) eine Pendelaufhängung umfaßt.

## Claims

1. Rail vehicle brake pad comprising
at least two friction material blocks (20.1, 20.2, 20.3, 20.4),
at least one holding device (24.1, 24.2), which is mounted on the friction material blocks (20.1, 20.2, 20.3, 20.4), for fastening the friction material blocks to a brake shoe (1), wherein
the individual friction material blocks (20.1, 20.2, 20.3, 20.4) are lamellar in shape, and
along their longitudinal sides, are connected with one another to form a brake pad (3), **characterized in that** the connection is constructed mechanically and/or by means of a shear-elastic intermediate layer such that the individual friction material blocks can be replaced with respect to one another.

2. Rail vehicle brake pad according to Claim 1, **characterized in that** the shear-elastic intermediate layer (29.1, 29.2, 29.3) is an adhesive layer or an intermediate layer glued to the friction material blocks (20.1, 20.2, 20.3, 20.4).

3. Rail vehicle brake pad according to Claim 1, **characterized in that** the intermediate layer (29.1, 29.2, 29.3) is constructed as a sliding layer, a sliding metal sheet or a sliding foil.

4. Rail vehicle brake pad according to one of the above-mentioned claims, **characterized in that** the mechanical connection is a screwed, riveted or form-locking clamp-type connection (22.1., 22.2).

5. Rail vehicle brake pad according to one of the above-mentioned claims, **characterized in that** a holding device (24.1, 24.2) is assigned to each friction material block (20.1, 20.2, 20.3, 20.4).

6. Rail vehicle brake pad according to one of the above-mentioned claims, **characterized in that** the holding device (24.1, 24.2) is a sheet metal reinforcement (26.1, 26.2) which is arranged on the side facing the brake shoe (1) and has holding angles (28.1, 28.2).

7. Method of producing a brake pad according to one of Claims 1 to 6, **characterized in that** the individual lamellar friction material blocks (20.1, 20.2, 20.3, 20.4) are obtained by a pressing or cutting of plates, and the individual lamellar friction material blocks (20.1, 20.2, 20.3, 20.4) are connected with one another by gluing or in a mechanical manner along their longitudinal sides to form a brake pad (3) such that the individual friction material blocks can be replaced with respect to one another.

8. Rail vehicle brake having at least
one brake shoe,
a power unit for operating the brake shoe, the brake shoe comprising
a carrier body (40),
a connection device (11) to a power unit for operating the brake shoe (1),
a friction material holding device (41) for holding at least one brake pad, comprising at least two friction material blocks (20.1, 20.2, 20.3, 20.4) on the brake shoe (1), **characterized in that**
the brake pad with at least two friction material blocks is a brake pad according to one of Claims 1 to 6.

9. Rail vehicle brake according to Claim 8, **characterized in that** the friction material block holding device (41) comprises at least one guide rail (42.1, 42.2, 42.3, 42.4) in the turning direction of the wheel (50).

10. Rail vehicle brake according to Claim 9, **characterized in that** the friction material block holding device (41) comprises at least two guide rails (42.1, 42.2, 42.3, 42.4) in the turning direction of the wheel (50) which are connected with one another in the form of a balance beam system (44).

11. Rail vehicle brake according to Claim 10, **characterized in that** the balance beam system (44) comprises individual balance beams (48.1, 48.2, 48.3) which are hinged to one another.

12. Rail vehicle brake according to Claim 10, **characterized in that** the entire balance beam system (44) is an integrated bending-elastic component.

13. Rail vehicle brake according to Claim 12, **characterized in that** the integrated component is made of sectional steel.

14. Rail vehicle brake according to Claim 9, **characterized in that** the friction material block holding device (24.1, 24.2) for the displaceable guiding of at least one frictional material block (20.1, 20.2, 20.3, 20.4) on the brake shoe (1) has at least one spring element (72).

15. Rail vehicle brake according to Claim 14, **characterized in that** the friction material block (20.1, 20.2, 20.3, 20.4) is spring-elastically displaceably guided by means of the spring element (72) in the operating direction.

16. Rail vehicle brake according to one of Claims 9 to 15, **characterized in that** the brake shoe (1) has lateral surfaces (58, 60) toward the face of the wheel (50).

17. Rail vehicle brake according to Claim 16, **characterized in that** the guiding surfaces (58, 60) are further developed as wear-resistant plates (62, 64) toward the wheel side.

18. Rail vehicle brake according to Claim 16 or 17, **characterized in that** the connection device (11) of the brake shoe (1) to the power unit is further developed such that, during axial movements of the wheel set, the brake shoe (1) is carried along by means of the guiding surfaces (58, 60).

19. Rail vehicle brake according to Claim 18, **characterized in that** the connection device (11) comprises a pendulum suspension.

## Revendications

1. Sabot de frein de véhicule ferroviaire, comprenant :
au moins deux blocs (20.1, 20.2, 20.3, 20.4) de matériau de frottement ;
au moins un dispositif (24.1, 24.2) de maintien, monté sur les blocs (20.1, 20.2, 20.3, 20.4) de matériau de frottement, pour fixer les blocs de matériau de frottement sur un segment (1) de frein,
les blocs (20.1, 20.2, 20.3, 20.4) individuels de matériau de frottement étant en forme de lamelles ; et
étant mutuellement assemblés en un sabot (3) de frein le long de leurs côtés longitudinaux, **caractérisé en ce que**
l'assemblage est effectué mécaniquement et/ou à l'aide d'une couche intermédiaire élastique en cisaillement, de telle sorte que les blocs individuels de matériau de frottement sont coulissants les uns par rapport aux autres.

2. Sabot de frein de véhicule ferroviaire suivant la revendication 1, **caractérisé en ce que** la couche (29.1, 29.2, 29.3) intermédiaire élastique en cisaillement est une couche de colle ou une couche intermédiaire assemblée par collage aux blocs (20.1, 20.2, 20.3, 20.4) de matériau de frottement.

3. Sabot de frein de véhicule ferroviaire suivant la revendication 1, **caractérisé en ce que** la couche (29.1, 29.2, 29.3) intermédiaire est réalisée sous forme de couche de glissement, de tôle de glissement ou de feuille de glissement.

4. Sabot de frein de véhicule ferroviaire suivant l'une des revendications précédentes, **caractérisé en ce que** l'assemblage mécanique est un assemblage (22.1, 22.2) par étrier de serrage boulonné, riveté ou à complémentarité de forme.

5. Sabot de frein de véhicule ferroviaire suivant l'une des revendications précédentes, **caractérisé en ce qu'**un dispositif (24.1, 24.2) de maintien est associé à chaque bloc (20.1, 20.2, 20.3, 20.4) de matériau de frottement.

6. Sabot de frein de véhicule ferroviaire suivant l'une des revendications précédentes, **caractérisé en ce que** le dispositif (24.1, 24.2) de maintien est une tôle (26.1, 26.2) de renforcement, disposée sur le côté tourné vers le segment (1) de frein et pourvue d'équerres (28.1, 28.2) de maintien.

7. Procédé de fabrication d'un sabot de frein suivant l'une des revendications 1 à 6, **caractérisé en ce que** les blocs (20.1, 20.2, 20.3, 20.4) individuels de matériau de frottement en forme de lamelles sont obtenus par emboutissage ou découpage de plaques, et les blocs individuels (20.1, 20.2, 20.3, 20.4) de matériau de frottement sont mutuellement assemblés en un sabot (3) de frein le long de leurs côtés longitudinaux, mécaniquement ou par collage, de telle sorte que les blocs individuels de matériau de frottement sont coulissants les uns par rapport aux autres.

8. Frein de véhicule ferroviaire, comportant au moins
un segment de frein ;
une unité de production de force pour actionner le segment de frein, le segment de frein comprenant :
un corps (40) porteur ;
un dispositif (11) de rattachement à une unité de production de force pour actionner le segment (1) de frein ;
un dispositif (41) de maintien de bloc de matériau de frottement pour maintenir au moins un sabot de frein, comprenant au moins deux blocs (20.1, 20.2, 20.3, 20.4) de matériau de frottement sur le segment (1) de frein ;
**caractérisé en ce que** le sabot de frein doté d'au moins deux blocs de matériau de frottement est un sabot de frein suivant l'une des revendications 1 à 6.

9. Frein de véhicule ferroviaire suivant la revendication 8, **caractérisé en ce que** le dispositif (41) de maintien de bloc de matériau de frottement comprend au moins un profilé (42.1, 42.2, 42.3, 42.4) de guidage dans la direction de rotation de la roue (50).

10. Frein de véhicule ferroviaire suivant la revendication 9, **caractérisé en ce que** le dispositif (41) de maintien de bloc de matériau de frottement comprend au moins deux profilés (42.1, 42.2, 42.3, 42.4) de guidage dans la direction de rotation de la roue (50), qui sont mutuellement assemblés sous la forme d'un système (44) de fléaux de balance.

11. Frein de véhicule ferroviaire suivant la revendication 10, **caractérisé en ce que** le système (44) de fléaux de balance comprend des fléaux (48.1, 48.2, 48.3) individuels qui sont mutuellement assemblés en articulation.

12. Frein de véhicule ferroviaire suivant la revendication 10, **caractérisé en ce que** l'ensemble du système (44) de fléaux de balance est un élément intégré, élastique en flexion.

13. Frein de véhicule ferroviaire suivant la revendication 12, **caractérisé en ce que** l'élément intégré est fabriqué en acier profilé.

14. Frein de véhicule ferroviaire suivant la revendication 9, **caractérisé en ce que** le dispositif (24.1, 24.2) de maintien de bloc de matériau de frottement comporte au moins un élément (72) de ressort pour le guidage en coulissement d'au moins un bloc (20.1, 20.2, 20.3, 20.4) de matériau de frottement sur le segment (1) de frein.

15. Frein de véhicule ferroviaire suivant la revendication 14, **caractérisé en ce que** le bloc (20.1, 20.2, 20.3, 20.4) de matériau de frottement est, au moyen de l'élément (72) de ressort, guidé. en coulissement à élasticité de ressort dans la direction d'actionnement.

16. Frein de véhicule ferroviaire suivant l'une des revendications 9 à 15, **caractérisé en ce que** le segment (1) de frein comporte des surfaces (58, 60) de guidage latérales tournées vers le côté frontal de la roue (50).

17. Frein de véhicule ferroviaire suivant la revendication 16, **caractérisé en ce que** les surfaces (58, 60) de guidage sont réalisées sous la forme de plaques (62, 64) résistantes à l'usure tournées vers la roue.

18. Frein de véhicule ferroviaire suivant la revendication 16 ou 17, **caractérisé en ce que** le dispositif (11) de rattachement du segment (1) de frein à l'unité de production de force est conçu de telle sorte que le segment (1) de frein accompagne à l'aide des surfaces (58, 60) de guidage les mouvements axiaux de l'essieu monté.

19. Frein de véhicule ferroviaire suivant la revendication 18, **caractérisé en ce que** le dispositif (11) de rattachement comprend une suspension pendulaire.
